# DEMANDE DE BREVET EUROPEEN

(11) **EP 4 410 680 A1**
(43) Date de publication de la demande: **07.08.2024**
(21) Numéro de dépôt: 24153765.3
(22) Date de dépôt: 24.01.2024
(51) Int. Cl.: B64D 27/24, B64D 35/08, F16H 1/22, B64D 27/02, F01D 15/10, F01D 25/16, F16H 1/28, F16H 55/17, B64C 11/30, B64D 27/00

(54) **TURBOMACHINE COMPRENANT UN RÉDUCTEUR DE VITESSE INTÉGRANT UNE MACHINE ÉLECTRIQUE**

(30) Priorité: 31.01.2023 FR 2300889
(71) Demandeur: Safran Transmission Systems, 92700 Colombes (FR)
(72) Inventeur: FERNANDEZ, Maxime, 77550 MOISSY-CRAMAYEL (FR); DOUY, Yohan, 77550 MOISSY-CRAMAYEL (FR); MORELLI, Boris Pierre Marcel, 77550 MOISSY-CRAMAYEL (FR); PELTIER, Jordane Emile André, 77550 MOISSY-CRAMAYEL (FR)
(74) Mandataire: Gevers & Orès

(57) **Abrégé**

L'invention concerne une turbomachine d'aéronef, comprenant :
- un réducteur de vitesse (4) comportant un pignon d'entrée (40) relié à un arbre de puissance (2) et un pignon de sortie (41) relié à un arbre d'hélice, et
- une machine électrique (60) intégrée dans le réducteur de vitesse et configurée pour fournir de la puissance électrique à l'arbre d'hélice ou à prélever de la puissance mécanique sur l'arbre d'hélice, la machine électrique comprenant un rotor (61) entraîné en rotation autour d'un axe coaxial à un axe longitudinal X de la turbomachine et un stator (62) relié à un carter.

Selon l'invention, le pignon d'entrée comprend un axe d'entrée (43) décalé par rapport à un axe du pignon de sortie et le réducteur de vitesse comprend deux lignes intermédiaires de transmission sensiblement parallèles et pouvant transmettre le couple du pignon d'entrée au pignon de sortie lequel est destiné à entraîner en rotation le rotor.

## Description

### Domaine de l'invention

La présente invention concerne le domaine général de l'aéronautique. Elle vise en particulier un réducteur mécanique de vitesse dans lequel est intégré une machine électrique.

### Arrière-plan technique

Le rôle d'un réducteur mécanique est de modifier le rapport de vitesse et de couple entre l'axe d'entrée et l'axe de sortie d'un système mécanique.

Les aéronefs équipés de turbopropulseurs sont généralement équipés d'un réducteur mécanique (connu sous l'acronyme anglais « PGB » pour Propeller Gear Box) permettant d'adapter les vitesses de rotations entre la turbine et l'hélice tout en permettant de générer un décalage entre l'axe de rotation de l'hélice et l'axe de rotation de la turbine. Ce décalage, aussi appelé « Offset », permet une bonne intégration de l'entrée d'air verticalement sous ce réducteur.

Dans l'objectif d'améliorer les performances et l'efficacité de ces turbopropulseurs durant certaines phases de vol (Take-off, taxiing, ...) plusieurs solutions sont envisageables. Une de ces solutions consiste à hybrider le turbopropulseur en ajoutant une machine électrique (en mode moteur) au réducteur afin de fournir de la puissance supplémentaire lors des phases de vol concernées. Il est aussi possible de se servir de cette machine électrique (en mode générateur) pour récupérer de l'énergie ou puissance lors de certaines phases de vol.

Il existe plusieurs architectures de réducteur. Dans l'état de l'art des turbopropulseurs, les réducteurs sont de type planétaire avec offset ou épicycloïdal avec offset. Il existe aussi des architectures dites compound.
- Sur un réducteur planétaire à offset, le porte-satellites est fixe et la couronne constitue l'arbre de sortie du dispositif qui tourne dans le sens inverse du solaire.
- Sur un réducteur épicycloïdal à offset, la couronne est fixe et le porte-satellites constitue l'arbre de sortie du dispositif qui tourne dans le même sens que le solaire.
- Sur un réducteur compound, aucun élément n'est fixé en rotation et la puissance est divisée sur deux lignes intermédiaires parallèles. La roue de sortie tourne dans le même sens que le pignon d'entrée.

Un réducteur de type épicycloïdal à offset comprend un pignon d'entrée qui engrène sur une roue de l'étage n°1 qui elle-même entraine un pignon central appelé solaire engrenant sur des pignons appelés satellites qui sont eux même en prise avec une couronne. Les satellites sont maintenus par un châssis appelé porte-satellites. Le solaire, la couronne et le porte-satellites sont des planétaires car leurs axes de révolution coïncident avec l'axe longitudinal X de l'hélice. Les satellites ont chacun un axe de révolution différents équirépartis sur le même diamètre de fonctionnement autour de l'axe des planétaires. Ces axes sont parallèles à l'axe longitudinal X.

Un réducteur de type compound comprend un pignon d'entrée, sur lequel deux pignons intermédiaires (appelés idlers) viennent prélever de la puissance. Les pignons idlers entrainent ensuite, par l'intermédiaire d'un deuxième jeu de dentures, la ligne de sortie. En jouant sur le nombre de dents des différents pignons, il est possible d'obtenir un rapport de réduction de vitesse entre la ligne d'entrée et la ligne de sortie.

Un exemple de réducteur avec des lignes intermédiaires est décrit dans le document EP-B1-3201492.

Les réducteurs peuvent être composés d'un ou plusieurs étages d'engrènement. Cet engrènement est assuré de différentes façons comme par contact, par friction ou encore par champs magnétique.

Il existe plusieurs types d'engrènement par contact comme avec des dentures droites, hélicoïdales ou en chevron.

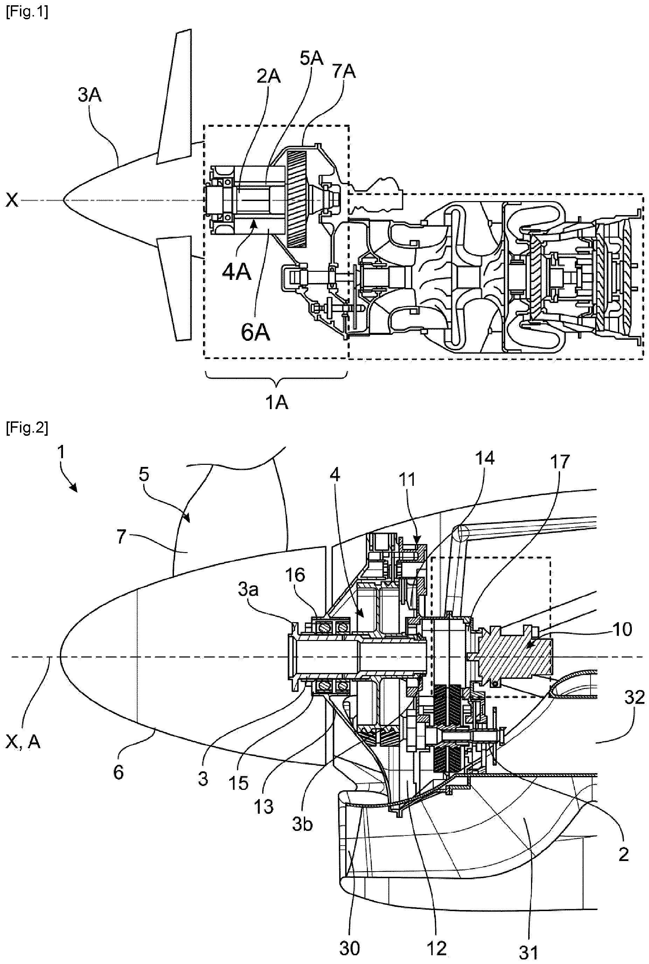

Le document de brevet FR-B1-3073569 et le document FR-A1-3116303 décrivent chacun un réducteur de vitesse 1A permettant d'entraîner l'arbre 2A d'une hélice 3A d'un turbopropulseur en rotation tel qu'illustré sur la figure 1. Le réducteur de vitesse 1A est équipé d'une machine électrique 4A destinée à fournir de la puissance électrique à l'aéronef. La machine électrique 4A est agencée dans le volume dédié au réducteur de vitesse 1A de manière à ne pas impacter l'encombrement dans cette zone du turbopropulseur. La machine électrique 4A comprend un rotor 5A creux qui est relié de manière amovible à l'arbre 2A de l'hélice et coaxial avec celui-ci. En particulier, l'arbre 2A de l'hélice traverse le rotor 5A. La machine électrique comprend un stator 6A qui est relié à un carter statorique 7A du turbopropulseur. Le carter statorique 7A entoure l'arbre 2A et comprend un alésage dans lequel est monté le stator 6A. Ce dernier s'étend à l'extérieur du rotor. La configuration de la machine électrique est compacte. Toutefois, ce type d'intégration est viable tant que le niveau de puissance électrique demandé par les équipements de l'aéronef reste modéré. En effet, plus la machine électrique est puissante et plus son volume augmente, ce qui peut fortement limiter son intégration au sein du réducteur de vitesse. Or, de nombreux équipements sont de plus en plus alimentés en énergie électrique pour réduire l'impact environnemental.

Il existe un besoin de résoudre tout ou partie des inconvénients précités.

### Résumé de l'invention

L'objectif de la présente invention est de fournir une solution simple et économique permettant d'intégrer une machine électrique dans un réducteur de vitesse sans impacter l'encombrement et la configuration des organes à proximité.

Nous parvenons à cet objectif conformément à l'invention grâce à une turbomachine, en particulier pour aéronef, présentant un axe longitudinal X et comprenant :
- un arbre de puissance,
- un arbre d'hélice centré sur l'axe longitudinal et destiné et configuré de sorte à entraîner au moins une hélice de la turbomachine,
- au moins un réducteur de vitesse destiné et configuré de sorte à être entraîné par l'arbre de puissance et à entraîner en rotation l'arbre d'hélice à une vitesse différente de celle de l'arbre d'entraînement, le réducteur de vitesse comportant un pignon d'entrée relié à l'arbre de puissance et un pignon de sortie relié à l'arbre d'hélice, et
- au moins une machine électrique qui est intégrée dans le réducteur de vitesse et qui est configurée de manière à fournir de la puissance électrique à l'arbre d'hélice ou à prélever de la puissance mécanique sur l'arbre d'hélice, la machine électrique comprenant un rotor qui est configuré pour être entraîné en rotation autour d'un axe coaxial à l'axe longitudinal X et un stator relié à un carter de la turbomachine,

le pignon d'entrée comprenant un axe d'entrée décalé par rapport à un axe du pignon de sortie et en ce que le réducteur de vitesse comprend au moins deux lignes intermédiaires de transmission qui sont sensiblement parallèles et qui sont configurées pour transmettre le couple du pignon d'entrée au pignon de sortie lequel est destiné et configuré de sorte à entraîner en rotation le rotor.

Ainsi, cette solution permet d'atteindre l'objectif susmentionné. En particulier, le fait de décaler l'axe du pignon d'entrée de l'axe du pignon de sortie et de fournir des moyens de transmission de couple entre le pignon d'entrée et de sortie permet d'agencer le réducteur de vitesse dans l'axe de l'hélice. Ce dernier pourra ainsi avoir différents types de puissances sans impacter l'encombrement dans le volume où est situé le réducteur de vitesse et aussi l'encombrement au sein du réducteur de vitesse. Plus précisément, l'encombrement radial est réduit et l'encombrement axial est faible. Cette disposition permet également de conserver l'agencement d'un éventuel système de changement de pas pour des hélices à calage variable. L'entraînement du rotor par le pignon de sortie et inversement facilite l'intégration du rotor dans le réducteur de vitesse et améliore les performances de la machine électrique.

La turbomachine comprend également l'une ou plusieurs des caractéristiques suivantes, prises seules ou en combinaison :
- chaque ligne intermédiaire de transmission comprend un premier pignon intermédiaire monté rotatif autour d'un axe de rotation et comprenant une première denture destinée et configuré de sorte à engrener avec une denture externe du pignon d'entrée.
- chaque ligne intermédiaire de transmission comprend un deuxième pignon intermédiaire monté rotatif autour d'un axe de rotation et comprenant une deuxième denture destinée et configuré de sorte à engrener avec une denture externe du pignon de sortie.
- le réducteur de vitesse comprend une roue d'entraînement entraînée d'une part, par le pignon de sortie et entrainant d'autre part, un pignon complémentaire monté sur le rotor, le pignon complémentaire du rotor comprenant un axe parallèle à l'axe de l'arbre d'hélice.
- la roue d'entraînement comprend une première denture externe engrenant avec une denture interne du pignon de sortie et une deuxième denture externe engrenant avec une denture externe du pignon complémentaire.
- le rotor est creux et est traversé au moins en partie par l'arbre d'hélice.
- le stator s'étend radialement à l'extérieur du rotor.
- la turbomachine comprend un système de changement de pas agencé de manière coaxiale à l'axe de l'arbre d'hélice.
- le système de changement de pas est agencé au moins en partie à l'intérieur du rotor.
- la turbomachine comprend une entrée d'air qui est agencée en-dessous du réducteur de vitesse selon une direction verticale perpendiculaire à l'axe longitudinal.
- la machine électrique est annulaire.
- la machine électrique présente une forme générale cylindrique.
- l'axe de rotation du premier pignon intermédiaire est colinéaire avec l'axe longitudinal.
- l'axe de rotation du deuxième pignon intermédiaire est colinéaire avec l'axe longitudinal.
- le système de changement de pas comprend un arbre ou un organe qui est fixé à la deuxième extrémité de l'arbre d'hélice.
- le réducteur de vitesse comprend une unique machine électrique.
- le réducteur de vitesse comprend des machines électriques montées en série suivant l'axe longitudinal X.
- une portion du corps cylindrique du rotor s'étend radialement au-dessus des premiers pignons intermédiaires des lignes intermédiaires de transmission.

L'invention concerne en outre un aéronef équipé d'une telle turbomachine.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
La figure 1 représente un exemple de turbopropulseur comprenant un mécanisme de réduction et une machine électrique selon l'art antérieur ;
La figure 2 illustre un exemple d'agencement d'un mécanisme de réduction dans une turbomachine selon l'invention ;
La figure 3 est une vue en coupe axiale d'un exemple de mécanisme de réduction dans lequel est intégrée une machine électrique selon l'invention ;
La figure 4 est une vue en perspective d'un exemple de mécanisme de réduction selon l'invention ;
La figure 5 est une vue de dessus du mécanisme de réduction selon la figure 4 ;
La figure 6 est une vue arrière du mécanisme de réduction selon la figure 4 ;
La figure 7 est une vue avant du mécanisme de réduction selon la figure 4.

### Description détaillée de l'invention

La figure 1 montre une vue en coupe axiale d'une turbomachine équipée d'un mécanisme de réduction et qui a déjà été décrite précédemment.

La figure 2 représente une turbomachine 1 d'axe longitudinal X. La turbomachine 1 illustrée est un turbopropulseur équipé d'une seule hélice non carénée destinée à être montée sur un aéronef. Le turbopropulseur peut comprendre un doublet d'hélices contrarotatives, non carénées. Ces turbopropulseurs sont connus sous l'expression anglaise « open rotor ». Bien entendu, la turbomachine peut être un turboréacteur simple flux ou double flux.

La turbomachine comprend un arbre de puissance 2, un arbre d'hélice 3 et un mécanisme de réduction. Le mécanisme de réduction est avantageusement un réducteur de vitesse 4 qui est destiné et configuré de sorte à être entraîné par l'arbre de puissance 2 et à entraîner en rotation l'arbre d'hélice 3 à une vitesse différente de celle de l'arbre de puissance.

De manière avantageuse, la vitesse de l'arbre de puissance 2 est supérieure à celle de l'arbre d'hélice 3. A titre d'exemple, la vitesse de l'arbre de puissance 2 est de l'ordre de 25000 tours par minute tandis que la vitesse de l'arbre d'hélice 3 est de l'ordre de 2000 tours par minutes. Cela permet un entraînement optimal de l'arbre d'hélice 3 et une propulsion efficace de l'aéronef.

L'arbre d'hélice 3 présente un axe de rotation A qui est centré sur l'axe longitudinal X. De manière avantageuse l'arbre d'hélice 3 s'étend entre une première extrémité 3a et une deuxième extrémité 3b.

La turbomachine comprend avantageusement une hélice 5 non carénée qui est reliée à l'arbre d'hélice 3. L'arbre d'hélice 3 est destiné et configuré de sorte à entrainer l'hélice 5 en rotation de sorte à réaliser la propulsion de l'aéronef. L'hélice 5 comprend un carter cylindrique 6 qui est fixé à la première extrémité 3a de l'arbre d'hélice 3.

Chaque hélice 5 comprend des pales 7 qui sont disposées régulièrement autour de l'axe longitudinal X. Les pales 7 comprennent des pieds qui sont logés chacun respectivement dans un logement prévu dans un anneau (non représenté) et s'étendent depuis cet anneau. L'anneau est centré sur l'axe longitudinal et est solidaire en rotation du carter cylindrique 6.

Un système de changement de pas 10 est prévu pour changer le calage ou l'orientation des pales 7 de chaque hélice 5 autour d'un axe radial de calage. Cela permet d'orienter les pales dans une position angulaire souhaitée en fonction des conditions de fonctionnement de la turbomachine et les différentes phases de vol. Dans le présent exemple, le système de changement de pas 10 est disposé suivant l'axe longitudinal de la turbomachine et plus précisément encore suivant l'axe de l'arbre d'hélice 3.

Comme nous pouvons le voir sur la figure 2, le réducteur de vitesse 4 est positionné dans la partie amont de la turbomachine. Le système de changement de pas 10 est avantageusement situé en aval du réducteur de vitesse 4.

Dans la présente invention, les termes « amont » et « aval » sont définis par rapport à la circulation des gaz dans la turbomachine et ici suivant l'axe longitudinal X et à la figure 2 de gauche à droite.

Le réducteur de vitesse 4 et le système de changement de pas 10 sont agencés dans un volume interne de la turbomachine. De manière avantageuse, mais non limitativement, le réducteur de vitesse 4 est agencé dans le volume interne de la nacelle où il y a peu de place disponible.

En particulier, la turbomachine 1 comporte schématiquement un carter statorique 11. Le carter statorique 11 est agencé de manière à former une enceinte 12 entourant le réducteur de vitesse 4. Le carter statorique 11 est avantageusement indépendant des carters de la turbomachine tels que le carter d'entrée de la turbomachine 1. Le carter 11 est solidarisé à la nacelle de la turbomachine. Un brouillard de lubrifiant règne dans l'enceinte 12. L'enceinte 12 est traversée au moins en partie par l'arbre d'hélice 3 suivant l'axe longitudinal X.

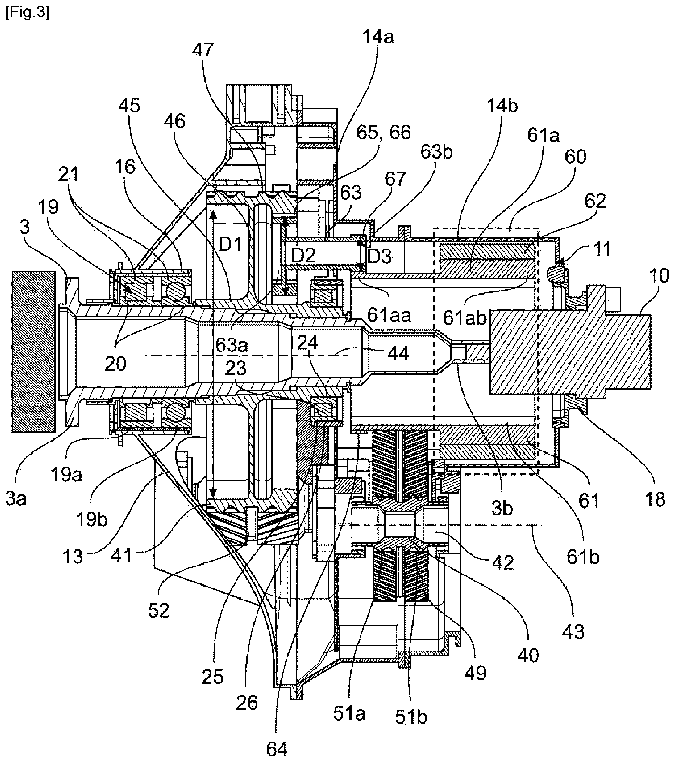

Le carter 11 comprend de manière avantageuse, mais non limitativement, une partie amont 13 et une partie aval 14. La partie amont 13 et la partie aval 14 sont séparées l'une de l'autre ici. La partie amont 13 du carter 11 comprend une première ouverture 15 permettant le passage de l'arbre d'hélice 3. La première ouverture 15 est délimitée par une paroi cylindrique 16 centrée sur l'axe longitudinal X. La partie aval 14 comprend une deuxième ouverture 17 permettant le passage au moins en partie du système de changement de pas 10. La deuxième ouverture 17 est délimitée par une jupe cylindrique 18 (mieux visible sur la figure 3) qui est centrée sur l'axe longitudinal X.

La partie amont 13 et la partie aval 14 sont fixées entre elles par exemple à l'aide de bride radiale et d'une liaison boulonnée. La partie aval 14 peut être réalisée d'une seule pièce ou être réalisée en deux portions 14a, 14b comme c'est le cas sur les figures 2 et 3.

En référence à la figure 3, l'arbre d'hélice 3 est entraîné en rotation par rapport au carter 11 grâce à des paliers. Dans le présent exemple deux paliers amont 19 sont montés en amont de l'enceinte 12. De manière avantageuse, les deux paliers amont 19 sont montés en amont du réducteur de vitesse 4. Chaque palier amont 19 comprend une bague interne 20 solidaire de l'arbre d'hélice 3 et une bague externe 21 solidaire de la paroi cylindrique 16 du carter. Sur l'exemple illustré, le premier palier amont 19a comprend des roulements à rouleaux et le deuxième palier amont 19b comprend des roulements à billes.

L'arbre d'hélice 3 est également entraîné en aval par un palier aval 23 de manière avantageuse. Le palier aval 23 est monté vers l'aval de l'enceinte 12. Plus précisément, le palier aval 23 est monté en aval d'un pignon de sortie 41 qui sera décrit plus en détail ultérieurement. Le palier aval 23 comprend une bague interne 24 qui est solidaire d'un arbre cylindrique 45 du pignon de sortie 41. Le palier aval 23 comprend une bague externe 25 qui est solidaire d'une paroi annulaire 26 du carter statorique 11.

L'enceinte 12 est de manière avantageuse mais non limitativement fermée en amont par des joints au niveau des paliers amont 19 permettant la traversée de l'arbre d'hélice 3, et en aval par des joints au niveau de la jupe cylindrique 18.

Dans le présent mode de réalisation, le système de changement de pas 10 est disposé au moins en partie dans l'enceinte 12 et s'étend suivant l'axe longitudinal. De manière avantageuse, le système de changement de pas 10 comprend un arbre ou un organe qui est fixé à la deuxième extrémité 3b de l'arbre d'hélice 3.

En référence à la figure 2, la turbomachine 1 comprend également une entrée d'air 30 qui est agencée en-dessous du réducteur de vitesse 4 selon une direction verticale perpendiculaire à l'axe longitudinal (et sur le plan de la figure 2). Autrement dit, l'entrée d'air est à l'aplomb de l'axe longitudinal. De manière avantageuse, l'entrée d'air 30 est prolongée vers l'aval par un manche d'air 31 qui s'étend en dessous du réducteur de vitesse 4 et du système de changement de pas 10. Ici, l'entrée d'air 30 est définie dans un plan radial qui est agencée en amont du pignon de sortie 41. Toutefois, l'entrée d'air pourrait être placée en aval du pignon de sortie 41.

De manière avantageuse, le manche d'air 31 présente avantageusement une forme en S. Le manche d'air 31 présente une sortie d'air 32 qui est définie dans un plan radial qui est situé en aval du système de changement de pas. Le réducteur de vitesse 4 et le système de changement de pas 10 sont situés en particulier dans une zone en creux du manche d'air 31 et délimite le volume disponible.

Sur la figure 3, le réducteur de vitesse 4 comprend un train d'engrenages à lignes intermédiaires de transmission qui est également appelé réducteur composé ou « compound » dans la terminologie anglo-saxonne. Le réducteur de vitesse 4 est connu sous l'acronyme anglais PGB pour « Propeller Gear Box » ou RGB pour « Réduction Gear Box ». Le réducteur de vitesse de type compound nécessite un système d'équilibrage de charge afin d'égaliser les charges entre des lignes intermédiaires.

Le réducteur de vitesse 4 comporte un pignon d'entrée 40 et un pignon de sortie 41 qui sont mobiles en rotation. Le pignon d'entrée 40 est relié à l'arbre de puissance. De manière avantageuse, le pignon d'entrée 40 est porté par un arbre 42 et sont coaxiaux. Dans le présent mode de réalisation, le pignon d'entrée 40 présente un axe d'entrée 43 qui est parallèle à l'axe longitudinal X de la turbomachine. L'arbre de puissance 2 est couplé à l'arbre 42 du pignon d'entrée 40 par exemple à l'aide de cannelures de sorte que l'arbre de puissance 2 soit solidaire du pignon d'entrée 40. L'arbre de puissance entraîne ainsi en rotation le pignon d'entrée 40.

L'arbre de puissance est de manière avantageuse un arbre de turbine que comprend classiquement une turbomachine.

Le pignon de sortie 41 est relié à l'arbre d'hélice 3. La liaison est réalisée par exemple à l'aide de cannelures de sorte que l'arbre d'hélice 3 soit solidaire du pignon de sortie 41. Le pignon de sortie 41 présente un axe de sortie 44 qui est confondu avec celui de l'arbre d'hélice (et avec l'axe longitudinal). Le pignon de sortie est autrement dit mobile en rotation autour de l'axe de sortie 44 colinéaire avec l'axe longitudinal X. En d'autres termes, l'axe du pignon d'entrée 40 est décalé, ici radialement, de l'axe de sortie 44 du pignon de sortie 41.

Le pignon de sortie 41 comprend dans cet exemple de réalisation un arbre cylindrique 45 s'étendant suivant l'axe de sortie 44. Le pignon de sortie 41 comprend une jante 46 qui s'étend radialement autour de l'arbre cylindrique 45 et qui porte au moins une denture externe 47.

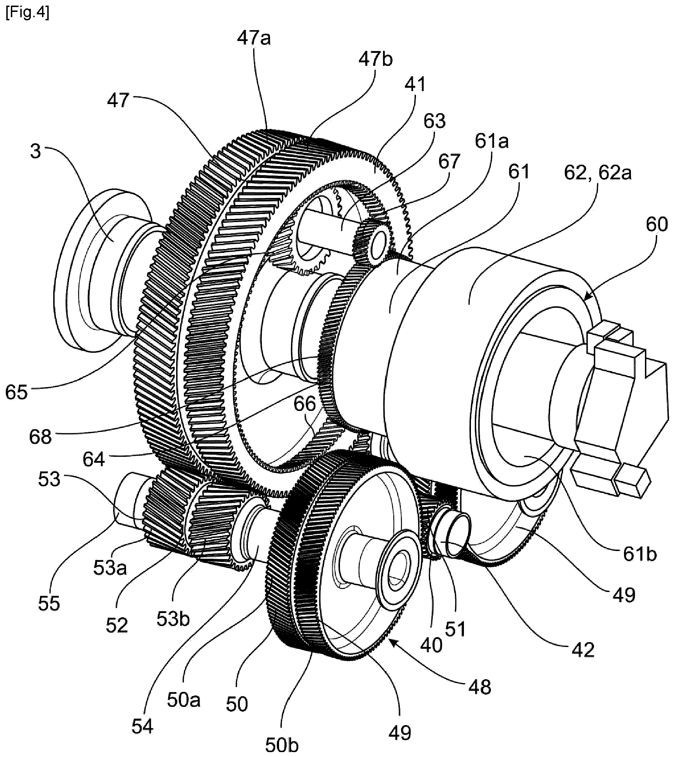

Sur la figure 4, le réducteur de vitesse 4 comprend des moyens de transmission de couple 48 qui sont configurées pour transmettre le couple du pignon d'entrée 40 au pignon de sortie 41. En particulier, la puissance transmise par le pignon d'entrée 40 est distribuée par les moyens de transmission de couple 48 avant d'être transférée au pignon de sortie 41.

De manière avantageuse, les moyens de transmission de couple 48 comprennent deux premiers pignons intermédiaires 49 montés rotatifs autour d'axes qui sont parallèles entre eux. Les axes des premiers pignons intermédiaires 49 sont également parallèles à l'axe longitudinal. Les deux premiers pignons intermédiaires 49 comprennent des dentures 50 qui engrènent avec une denture 51 du pignon d'entrée 40.

Dans le présent exemple, les moyens de transmission 48 comprennent deux lignes intermédiaires de transmission 55. Les deux lignes intermédiaires 55 sont sensiblement parallèles (plus ou moins inclinées de 5°) et sont sensiblement identiques. Dans un autre exemple de configuration, les lignes intermédiaires 55 peuvent être inclinées suivant un angle supérieur à 5°.

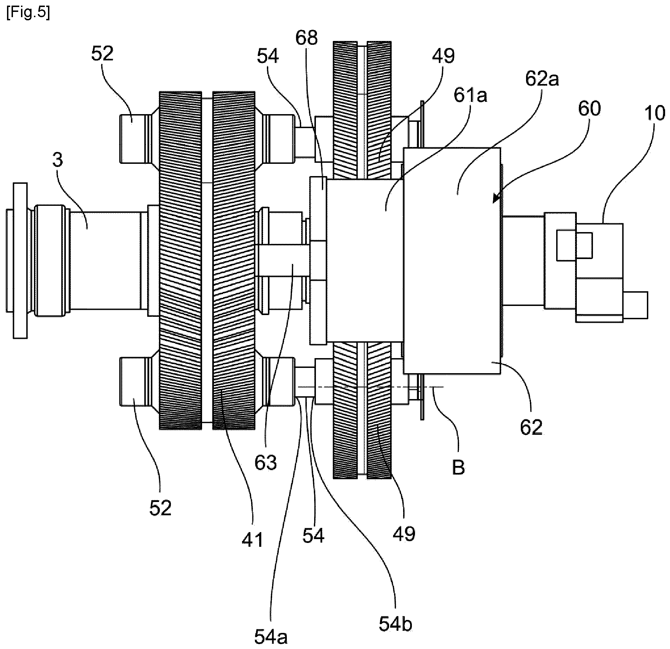

En référence aux figures 4 et 5, chaque ligne intermédiaire de transmission 55 comprend, de manière avantageuse, un deuxième pignon intermédiaire 52 monté rotatif autour d'un axe de rotation. Ce dernier est coaxial avec une ligne intermédiaire 55 correspondante. Les axes des deuxièmes pignons intermédiaires 52 sont également parallèles à l'axe longitudinal. Les deuxièmes pignons intermédiaires 52 comprennent chacun une denture externe 53 qui engrènent avec la denture externe 47 du pignon de sortie.

De manière avantageuse, les premiers pignons 49 intermédiaires et les deuxièmes pignons intermédiaires 52 sont solidaires en rotation. En particulier, les premiers pignons 49 et deuxièmes pignons 52 de chaque ligne intermédiaire 55 sont portés par un arbre 54. Cet arbre peut comprendre une souplesse et être utilisé pour l'équilibrage des charges grâce à sa souplesse. L'arbre 54 peut aussi servir pour la mesure de couple.

Avantageusement, mais non limitativement, l'arbre 54 s'étend entre une première extrémité 54a et une deuxième extrémité 54b. Chaque premier pignon intermédiaire 49 est disposé à la première extrémité de l'arbre 54 et chaque deuxième pignon intermédiaire 52 est disposé à la deuxième extrémité de l'arbre 54.

De manière avantageuse, les deuxièmes pignons intermédiaires 52 sont disposés en amont des premiers pignons intermédiaires 49.

La denture 51, 47 des pignons d'entrée et de sortie peut être droite (parallèle à l'axe longitudinal), hélicoïdale ou en chevron. De même, la denture des pignons d'entrée et de sortie peut être séparée en plusieurs hélices pour des raisons de fonctionnement, de montage, de fabrication, de contrôle, de réparation ou de rechange.

En référence aux figures 4 et 5, et de manière optionnelle, au moins un des pignons d'entrée, de pignon de sortie, des premiers pignons intermédiaires et deuxième pignons intermédiaires est séparé en deux demi-portions :
- une première portion constituée d'une jante laquelle porte la première hélice de la denture. Cette première hélice engrène avec celle d'un autre pignon du réducteur de vitesse ;
- une deuxième portion constituée d'une jante laquelle porte la deuxième hélice de la denture. Cette deuxième hélice engrène avec celle d'un autre pignon.

Dans le présent exemple de réalisation, le pignon d'entrée 40 comprend deux demi-portions portant respectivement une première hélice 51a et une deuxième hélice 51b. La première hélice 51a engrène avec une première hélice 50a de chacun des premiers pignon intermédiaire 49 et la deuxième hélice 51 b engrène avec une deuxième hélice 50b de chacun des premiers pignons intermédiaires 49. Le pignon de sortie 41 comprend deux demi-portions portant respectivement une première hélice 47a et une deuxième hélice 47b. La première hélice 47a engrène avec une première hélice 53a de chacun des deuxièmes pignons 52 et la deuxième hélice 47b engrène avec une deuxième hélice 53b de chacun des deuxièmes pignons intermédiaires 52.

De manière avantageuse, la direction de la première hélice est différente de celle de la deuxième hélice. Les directions sont opposées.

Bien entendu, chacun des pignons peut être formé d'une seule pièce.

Comme cela est illustré sur les différentes figures 2 à 6, le réducteur de vitesse 4 comprend en outre au moins une machine électrique 60. Cette dernière est plus précisément intégrée au réducteur de vitesse 4. Cette configuration permet de limiter l'encombrement dans la turbomachine. Le réducteur de vitesse 4 comprend de l'espace qui n'était pas utilisé auparavant. La machine électrique 60 est configurée de manière à fournir de la puissance électrique à l'arbre d'hélice, et à l'aéronef (mode générateur). La machine électrique peut également avantageusement prélever de la puissance mécanique sur l'arbre d'hélice (mode moteur). L'aéronef comprend pour cela un circuit électrique (non représenté) qui est relié d'une part, à la machine électrique 60 et d'autre part, à divers équipements de l'aéronef.

Dans le cadre de cet exemple de réalisation, le réducteur de vitesse comprend une unique machine électrique.

La turbomachine 1 pourrait comprendre deux machines électriques. Dans ce cas, les deux machines électriques seraient montées en série et plus précisément l'une à la suite de l'autre suivant l'axe longitudinal X. De même, un seul bloc électronique de puissance serait utilisé pour les deux machines électriques.

La machine électrique comprend un rotor 61 et un stator 62. Le rotor 61 est configuré pour être entraîné en rotation autour d'un axe coaxial à l'axe de l'arbre d'hélice et le stator 62 est relié au carter statorique 11 de la turbomachine. Suivant une caractéristique avantageuse, le pignon de sortie 41 du réducteur de vitesse 4 est destiné et configuré à entraîner en rotation le rotor 61 de la machine électrique 60.

De manière avantageuse, le rotor 61 est creux. Celui-ci est agencé de manière à être traversé au moins en partie par l'arbre d'hélice 3.

Plus précisément encore et comme illustré sur la figure 3, le rotor 61 présente un corps cylindrique 61a de section circulaire droit. Le corps 61a s'étend entre une première extrémité 61aa et une deuxième extrémité 61ab (suivant l'axe longitudinal). Le rotor 61 comprend un alésage interne 61b d'axe coaxial avec l'axe de l'arbre d'hélice 3. Cette configuration permet de contenir davantage l'encombrement dans le réducteur de vitesse et autour de celui-ci.

Comme nous pouvons le voir sur les figures 3 à 5, une portion du corps cylindrique 61a s'étend radialement au-dessus des premiers pignons intermédiaires 49 ce qui permet de maîtriser davantage l'encombrement axial. La première extrémité 61aa du corps cylindrique est avantageusement, mais non limitativement, disposée en amont des premiers pignons intermédiaires 49.

De manière avantageuse, le système de changement de pas 10 est agencé au moins en partie à l'intérieur du rotor 61. Comme cela est visible sur la figure 3, l'interface entre l'arbre d'hélice 3 et le système de changement de pas 10 se trouve à l'intérieur du rotor 61.

En référence aux figures 3 à 6, le réducteur de vitesse 4 comprend une roue d'entraînement 63 entraînée d'une part, par le pignon de sortie 41 et entrainant d'autre part, un pignon complémentaire 64 monté sur le rotor 61. Le pignon complémentaire 64 comprend un axe parallèle à l'axe de l'arbre d'hélice 3. Cette configuration permet l'entraînement du rotor de la machine électrique par le réducteur de vitesse sans impacter l'encombrement.

De manière avantageuse, mais non limitativement, le pignon complémentaire 64 est formé d'une seule pièce avec le rotor 61. Le pignon complémentaire 64 est dans ce cas monté radialement à l'extérieur du corps du rotor 61. De manière alternative, le pignon complémentaire 64 est rapporté sur le corps du rotor 61. Avantageusement, le pignon complémentaire 64 est agencé à la première extrémité 61aa du rotor.

La roue d'entraînement 63 est montée radialement à l'intérieur du pignon de sortie 41. À cet effet, la roue d'entraînement 63 comprend une première denture externe 65 engrenant avec une denture interne 66 du pignon de sortie 41. De manière avantageuse, mais non limitativement, le diamètre externe D2 de la première denture externe 65 est inférieur au diamètre interne D1 du pignon de sortie 41. L'agencement de la roue d'entraînement 63 à l'intérieur du pignon de sortie 41 permet de réduire l'encombrement radial et de se rapprocher de l'axe de l'arbre d'hélice coaxial avec le rotor de la machine électrique.

De manière avantageuse, la roue d'entrainement 63 comprend une deuxième denture externe 67 engrenant avec une denture externe 68 du pignon complémentaire 64. Suivant ce mode de réalisation, le diamètre externe D3 de la deuxième denture externe 67 est inférieur au diamètre D2 de la première denture externe 65.

Comme cela est représenté notamment sur les figures 3 et 4, la roue d'entraînement 63 s'étend entre une première extrémité 63a et une deuxième extrémité 63b. La première denture externe 65 est disposée avantageusement au niveau de la première extrémité 63a et la deuxième denture externe 67 est disposée avantageusement au niveau de la deuxième extrémité 63b.

De manière avantageuse, la roue d'entraînement 63 reste dans le même plan XY. De manière générale, les pignons ne se déplacent pas suivant l'axe longitudinal.

Le stator 62 de la machine électrique 60 s'étend radialement à l'extérieur du rotor 61. De manière avantageuse, le stator 62 comprend un corps cylindrique 62a coaxial avec l'axe du rotor 61. Dans le présent exemple, le stator 62 est fixé au carter 11. Le stator 62 est creux et reçoit le rotor qui s'étend à l'intérieur de celui-ci. En particulier, le corps cylindrique 62a comprend également un alésage interne.

Bien entendu, le stator 62 et le rotor 61 peuvent avoir des formes différentes dès lors que ceux-ci soient complémentaires et intégrables facilement dans l'espace disponible du réducteur de vitesse.

La machine électrique 60 peut fonctionner indifféremment en mode moteur et en mode générateur.

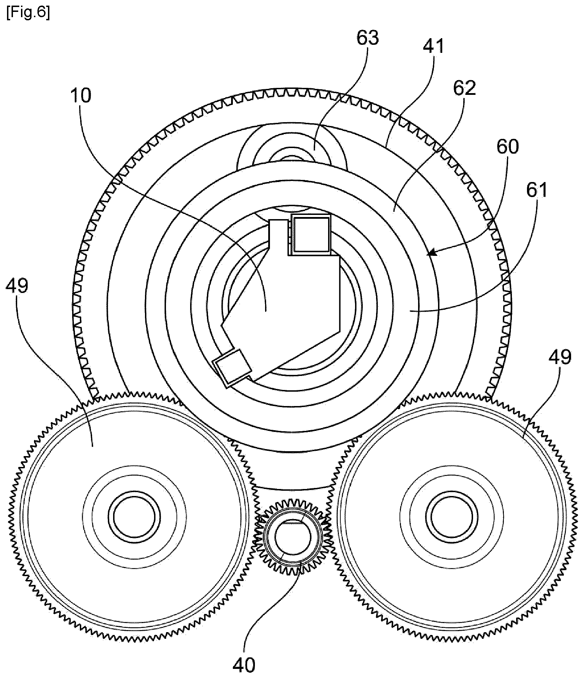

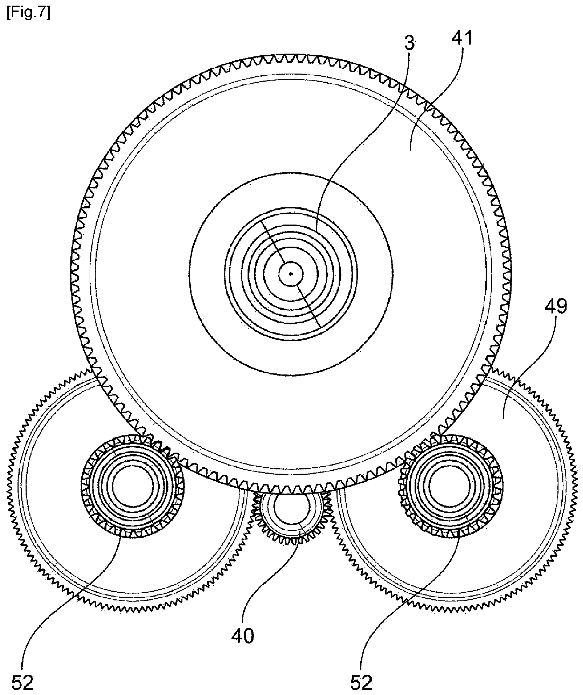

Dans le cas où la machine électrique fonctionne en mode générateur (l'arbre d'hélice ou la turbomachine 1 envoie de la puissance vers la machine électrique), le pignon d'entrée 40 engrène avec les premiers pignons intermédiaires 49 comme cela est visible sur la figure 6. La rotation des premiers pignons intermédiaires 49 entraîne la rotation des deuxième pignons intermédiaires 52. Ces derniers engrènent avec le pignon de sortie 41 dont la denture interne 66 est en prise avec la première denture externe 65 de la roue d'entraînement 63 comme cela est visible sur la figure 6 et sur la figure 7. La rotation du pignon de sortie 41 entraîne la rotation de la roue d'entraînement 63. Celle-ci entraîne en rotation le pignon complémentaire 64 monté sur le rotor 61 via les dentures externes.

Dans le cas où la machine électrique 60 fonctionne en mode moteur (la machine électrique envoie de la puissance vers l'arbre d'hélice), le pignon complémentaire 64 du rotor est entraîné en rotation et entraîne la roue d'entraînement 63 via la deuxième denture externe 67. La première denture externe 65 de la roue d'entraînement 63 (qui porte également la première denture) entraîne le pignon de sortie 41. Ce dernier entraîne les lignes intermédiaires 55 puis le pignon d'entrée 40.

## Revendications

1. Turbomachine (1), en particulier pour aéronef, présentant un axe longitudinal X et comprenant :
- un arbre de puissance (2),
- un arbre d'hélice (3) centré sur l'axe longitudinal,
- au moins un réducteur de vitesse (4), le réducteur de vitesse (4) comportant un pignon d'entrée (40) relié à l'arbre de puissance (2) et un pignon de sortie (41) relié à l'arbre d'hélice (3), et
- au moins une machine électrique (60) qui est intégrée dans le réducteur de vitesse (4) et qui est configurée de manière à fournir de la puissance électrique à l'arbre d'hélice (3) ou à prélever de la puissance mécanique sur l'arbre d'hélice, la machine électrique (60) comprenant un rotor (61) qui est configuré pour être entraîné en rotation autour d'un axe coaxial à l'axe longitudinal X et un stator (62) relié à un carter (11) de la turbomachine, **caractérisée en ce que** le pignon d'entrée (40) comprend un axe d'entrée (43) décalé par rapport à un axe du pignon de sortie (41) qui est coaxial à l'axe longitudinal (X) et **en ce que** le réducteur de vitesse (4) comprend au moins deux lignes intermédiaires de transmission (55) qui sont sensiblement parallèles et qui sont configurées pour transmettre le couple du pignon d'entrée (40) au pignon de sortie (41) lequel est destiné à entraîner en rotation le rotor (61).

2. Turbomachine (1) selon la revendication précédente, **caractérisée en ce que** chaque ligne intermédiaire de transmission (55) comprend un premier pignon intermédiaire (49) monté rotatif autour d'un axe de rotation et comprenant une première denture destinée à engrener avec une denture externe du pignon d'entrée (42).

3. Turbomachine (1) selon la revendication 1 ou 2, **caractérisée en ce que** chaque ligne intermédiaire de transmission (55) comprend un deuxième pignon intermédiaire (52) monté rotatif autour d'un axe de rotation et comprenant une deuxième denture destinée à engrener avec une denture externe (47) du pignon de sortie (41).

4. Turbomachine (1) selon l'une quelconque des revendications précédentes, **caractérisée en ce que** le réducteur de vitesse (4) comprend une roue d'entraînement (63) entraînée d'une part, par le pignon de sortie (41) et entrainant d'autre part, un pignon complémentaire (64) monté sur le rotor (61), le pignon complémentaire (64) du rotor (61) comprenant un axe parallèle à l'axe de l'arbre d'hélice (3).

5. Turbomachine (1) selon la revendication précédente, **caractérisée en ce que** la roue d'entraînement (63) comprend une première denture externe (65) engrenant avec une denture interne du pignon de sortie (41) et une deuxième denture externe (67) engrenant avec une denture externe (68) du pignon complémentaire (64).

6. Turbomachine (1) selon l'une quelconque des revendications précédentes, **caractérisée en ce que** le rotor (61) est creux et est traversé au moins en partie par l'arbre d'hélice (3).

7. Turbomachine (1) selon l'une quelconque des revendications précédentes, **caractérisée en ce que** le stator (62) s'étend radialement à l'extérieur du rotor (61).

8. Turbomachine (1) selon l'une quelconque des revendications précédentes, **caractérisée en ce qu'**elle comprend un système de changement de pas (10) agencé de manière coaxiale à l'axe de l'arbre d'hélice (3).

9. Turbomachine (1) selon la revendication précédente, **caractérisée en ce que** le système de changement de pas (10) est agencé au moins en partie à l'intérieur du rotor (61).

10. Turbomachine (1) selon l'une quelconque des revendications précédentes, dans laquelle une entrée d'air (30) est agencée en-dessous du réducteur de vitesse (4) selon une direction verticale perpendiculaire à l'axe longitudinal (X).
